# EUROPEAN PATENT SPECIFICATION

(11) **EP 4 200 174 B1**
(45) Date of publication and mention of the grant of the patent: **30.04.2025**
(21) Application number: 21765882.2
(22) Date of filing: 18.08.2021
(51) Int. Cl.: B60T 8/172, B60W 50/023, B60T 8/88

(54) **BRAKE SYSTEM FOR A VEHICLE AND METHOD FOR BRAKING**
BREMSSYSTEM FÜR EIN FAHRZEUG UND VERFAHREN ZUM BREMSEN
SYSTÈME DE FREIN POUR UN VÉHICULE ET PROCÉDÉ DE FREINAGE

(30) Priority: 24.08.2020 CN 202010856820
(43) Date of publication of application: 28.06.2023
(73) Proprietor: Haldex Aktiebolag, 261 24 Landskrona (SE)
(72) Inventor: NILSSON, Anders, 26145 Landskrona (SE); LINDQVIST, Anders, 26138 Landskrona (SE)
(74) Representative: Müller Schupfner & Partner Patent- und Rechtsanwaltspartnerschaft mbB (Muc)
(86) International application number: PCT/EP2021/072921
(87) International publication number: WO 2022/043153

(56) References cited:
- EP-A1- 3 623 242
- US-A1- 2009 192 689
- US-A1- 2012 226 469
- US-A1- 2019 135 273
- US-A1- 2020 132 192

## Description

### TECHNICAL FIELD OF THE INVENTION

The invention relates to the field of vehicle braking, in particular to an electromechanical brake system and a method for braking using the same.

### PRIOR ART

A brake system of a vehicle is usually provided with a wheel speed sensor for measuring a rotational speed of a wheel, thereby acquiring a real-time driving state of the vehicle, and activating a dynamic control function such as an anti-lock braking system (i.e., ABS), an anti-slip regulation (i.e., ASR), and an electronic stability control (i.e., ESC) when necessary. Furthermore, the rotational speed of a wheel may additionally also be provided to a higher-level control system in addition to the brake system, such as a Vehicle Control Unit (VCU), a driver assistance system, an autonomous driving system, etc.

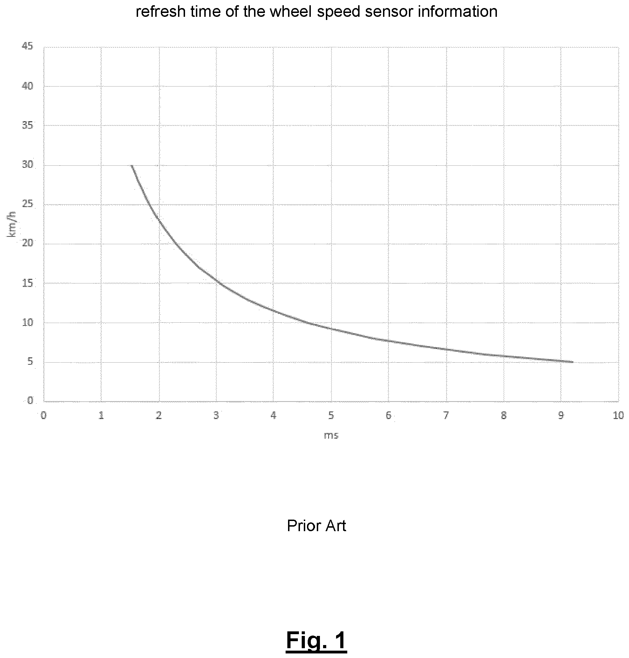

However, some wheel speed sensors currently used have a problem of low accuracy when the wheel rotational speed is low, resulting in a large error in the wheel rotational speed calculated from the wheel speed information obtained by the wheel speed sensor when the vehicle speed is low. An example of this is shown in Fig. 1. As shown, when the vehicle speed is, for example, 30 km/h, the refresh rate of the wheel speed sensors is less than 2 milliseconds, and when the vehicle speed is reduced to 5 km/h, the refresh rate of the wheel speed sensor will increase to over 9 milliseconds. Therefore, in a low speed situation, the refresh rate of the signal output by the wheel speed sensor is reduced, so that the signal output by the wheel speed sensor may not reflect the real dynamic characteristics of the wheel, thereby affecting the judgment of the control module of the vehicle brake system.

Therefore, it is felt necessary to provide an improved brake system for a vehicle, which overcomes the above-mentioned drawbacks of the prior art and obtains accurate wheel dynamic characteristics.

US 2019/0135273 A1 proposes a vehicle electronic stability control system wherein the vehicle electronic stability control unit receives signals both from wheel speed sensors as well as from an electric motor speed sensor. A predetermined wheel speed is a set wheel speed above which the wheel speed sensor performs well and which corresponds to normal vehicle travel speeds. The predetermined wheel speed can be determined by experiments and is about 2 km/h. If the electric motor speed sensor provides an output signal corresponding to a wheel speed that is greater than the predetermined wheel speed, the vehicle is considered to be travelling at relatively high speeds and the electronic stability control unit performs the control (in particular anti lock braking, traction control, stability control and/or other vehicle control functions) based on the output of the wheel speed sensor. Instead, if the electric motor speed sensor provides an output signal corresponding to a wheel speed that is less than or equal to the predetermined wheel speed, the vehicle is considered to be traveling at low speeds. In this case, the electronic stability control unit controls the electronic stability control devices based on the output of the electric motor speed sensor. Using the wheel speed sensor at normal travel speeds and using the electric motor speed sensor at low travel speeds is mentioned to be advantageous because the electric motor wheel speed sensor is connected to the electronic stability control unit via the vehicle communication bus, which communicates with the electronic stability control unit only periodically, for example every 20 ms. In contrast, the wheel speed sensor is directly wired to the electronic stability control unit which provides a higher information refresh rate. This higher refresh rate at higher vehicle speeds can, in some instances, be critical for providing save vehicle operation by the electronic stability control unit.

Further prior art is known from US 2012/226469 A1, US 2009/192689 A1, EP 3 623 242 A1 and US 2020/132192A1.

### OBJECT OF THE INVENTION

It is the object of the present invention to provide a brake system and a method for braking a vehicle which provides an accurate wheel rotational speed even when the vehicle speed is low and/or improves the control of the vehicle.

### SOLUTION

According to the present invention, the object of the invention is solved by the features of the independent claims. Additional preferred embodiments according to the invention are to be seen in the dependent claims.

### DESCRIPTION OF THE INVENTION

The present invention proposes a brake system for a vehicle comprising a control module and an electromechanical brake (EMB) providing braking force to a wheel, wherein the control module receives rotation speed information of at least one drive motor, which provides a driving torque to the vehicle, and wheel speed sensor information of at least one wheel, and compares the refresh rate of the rotation speed information of the drive motor and that of the wheel speed sensor information of the wheel, such that a wheel rotational speed generated from the information of a higher refresh rate will be used.

Thus, the brake system of the present invention will always use a wheel rotational speed generated from the one of a higher refresh rate between the rotation speed information of the drive motor and the wheel speed sensor information of the wheel. This ensures that the obtained wheel rotational speed is accurate, i.e. it can reflect the real wheel dynamic characteristics and helps the control module of the brake system to determine correctly.

Specifically, for example, the rotation speed information of the drive motor collected by a drive motor sensor and the wheel speed sensor information collected by a wheel speed sensor provided at least one wheel are sent to a control module of the brake system. The control module then compares the refresh rate of the rotation speed information of the drive motor and that of the wheel speed sensor information of the wheel. When the wheel speed sensor information refresh rate of the wheel is higher, the brake system naturally uses the rotational speed of the wheel generated from the wheel speed sensor information of the wheel, and when the wheel speed sensor information refresh rate of the wheel is lower, for example, when the vehicle speed is slow, the wheel speed sensor information refresh rate of the wheel is correspondingly low, the control module then use generates the wheel rotational speed with the rotation speed information of the drive motor, which is of a higher refresh rate.

In this context of the present invention, generating the rotational speed of the wheel means that the control module obtains the rotational speed of the respective wheel by calculating the received information by means of a program stored therein and/or by signal processing of the received signal, for example, the wheel speed sensor information.

The brake system of the invention is applicable to various power arrangements of a vehicle including a vehicle in which the drive motor drives the wheels through a differential, and also a vehicle in which the at least one drive motor is at least one pair of drive motors, i.e. at least two drive motors, and a pair of wheels of the vehicle are driven by the at least one pair of drive motors independently from one another. For the latter, it is contemplated herein both two-wheel drive and four-wheel independent drive.

The drive motor of the vehicle comprises an internal combustion engine and an electric motor. The drive motor provides a driving torque for running to the vehicle, drives the wheels in motion, and is controlled by a drive motor controller. In particular, the drive motor controller comprises a motor control unit and a motor drive. The motor control unit and the motor drive can be provided independently from each other, for example, the motor control unit integrated in the control module of the brake system or in the vehicle control unit (VCU). For full electric vehicles or hybrid vehicles using an electric motor as a drive motor, the motor control unit is the motor control unit of the vehicle, and it is the Engine Control Unit (ECU) of the vehicle for an internal combustion engine.

The brake system directly adopts electric energy as a power source, and the electric energy is converted into friction braking force acting on wheels through a braking motor and a mechanical transmission mechanism so as to apply service brake and parking brake. A number of control modules of the brake system may be provided, for example, in correspondence with the axles, based on a redundant architecture, each of the control modules controlling a part of the electric brakes in normal, and being capable of independently controlling the entire brake system in an emergency case. The control module may include, for example, an anti-lock braking function (ABS), an electronic stability control function (ESC), an anti-slip regulation function (ASR), and the like.

According to the invention, the control module of the brake system is configured such that, when the wheel rotational speed generated from the rotation speed information of the drive motor is used, it will use the wheel rotational speed generated from the wheel speed sensor information of the wheel for validation or vice versa. The above validation enhances the reliability of the wheel speed obtained by the brake system according to the present invention.

Preferably, a value could be preset for the deviation of the wheel rotational speed generated from the rotation speed information of the drive motor from that generated from the wheel speed sensor information of the wheel. The preset value can be an absolute value. If the difference between the two wheel rotational speeds is greater than the preset value, it can be determined that the wheel rotational speed generated by the rotation speed information of the drive motor is relatively inaccurate. Therefore, the control module of the brake system of the present invention is configured to use the wheel rotational speed generated from the wheel speed sensor information when the deviation between the two wheel rotational speeds mentioned above is greater than the preset value even if the refresh rate of the rotation speed information of the drive motor is higher. Thus, the control module of the brake system always uses the wheel rotational speed generated from the wheel speed sensor information of the wheel, regardless of which of the rotation speed information of the drive motor and the wheel speed sensor information of the wheel is of a higher refresh rate.

Alternatively or additionally, if the refresh rate of the wheel speed sensor information is higher than that of the rotation speed information of the drive motor, and the deviation of the wheel rotational speed generated from the wheel speed sensor information from the that generated from the rotation speed information of the drive motor is smaller than the preset value, it is indicated that the wheel rotational speed generated from the rotation speed information of the drive motor is accurate. In such a case, the control module of the brake system is configured to use the wheel rotational speed generated from the speed information of the drive motor when the refresh rate of the wheel speed sensor information is lower than that of the drive motor speed information.

Preferably, the control module of the brake system is configured such that when the power arrangement of the vehicle is that the drive motor drives a pair of driving wheels through a differential, if the wheel speed sensor information of one of the pair of driving wheels is missing, for example, when the wheel speed sensor is broken or the information transmission is interrupted, the control module speculates the rotational speed of the driving wheel, the wheel speed sensor of which is broken, based on the rotation speed information of the driving motor and the wheel speed sensor information of the other driving wheel.

Alternatively, the control module of the brake system is configured such that when the power arrangement of the vehicle is that the at least one drive motor is at least one pair of drive motors, and in which a pair of driving wheels of the vehicle are driven independently from each other, if the wheel speed sensor information of one of the driving wheels is missing, the control module generates the rotational speed of the driving wheel with the rotation speed information of the respective drive motor.

With the above construction, i.e. even if the wheel speed sensor information of a driving wheel is missing, the control module of the brake system can also obtain the wheel speed of the driving wheel with speculation, so that the functions of the control module of the brake system, such as anti-slip regulation and electronic stability control, can still operate normally, and the influence on them can thus be minimized.

The speculation is implemented in that when the at least one drive motor of the vehicle is at least a pair of drive motors, the control module of the brake system of the invention can be configured to generate the rotational speed of the driving wheel based on the speed information of the drive motor and the information of the driving torque transmission mechanism between the drive motor and the driving wheel. Here, the information of the driving torque transmission mechanism is usually pre-determined.

Preferably, the brake system according to the present invention comprises a redundant drive motor control unit. The redundant drive motor control unit enables at least partial control of the controller of the drive motor. With such an arrangement, when the drive motor controller fails, the motor drive can be controlled at least by the redundant drive motor control unit to control the operation and stop of the drive motor. The provision of the redundant drive motor control unit provides safety redundancy for the travelling of the vehicle. For example, the redundant drive motor control unit may not include functions such as energy recovery and hybrid braking to reduce the cost of the control module. However, the present invention is not limited thereto.

It is also preferred that the brake system according to the present invention comprises two control modules, each of which constitutes a braking circuit with at least one pair of electromechanical brakes. Specifically, the brake system of the vehicle comprises two control modules, a front axle control module and a rear axle control module. The front axle control module constitutes a circuit with the electromechanical brakes for the front axle, and the rear axle control module constitutes a circuit with the electromechanical brakes for the rear axle. Alternatively, the front axle control module and the rear axle control module each constitute a circuit with each of the electromechanical brakes for the front axle and the rear axle. Therefore, the brake system comprises a redundant brake circuit, improving the reliability of brake of the vehicle.

In addition, the present invention proposes a method for braking a vehicle, a brake system of the vehicle comprising a control module and an electromechanical brake providing braking force to a wheel, wherein the control module receives rotation speed information of at least one drive motor, which provides a driving torque to the vehicle, and wheel speed sensor information of at least one wheel, the method comprising following steps:
a) comparing the refresh rate of the rotation speed information of the drive motor and that of the wheel speed sensor information of the wheel;
b) generating a wheel rotational speed of the wheel from the one of a higher refresh rate from the rotation speed information of the drive motor and the wheel speed sensor information of the wheel.

In the context herein, to generate a wheel rotational speed means that the control module of the brake system of the vehicle obtains the rotational speed of a wheel by calculating the information it receives by means of a program built therein and/or by processing the signal of the received information, for example by processing the wheel speed sensor information.

The braking method mentioned above is applicable to vehicles with various power arrangements, for example, a vehicles in which a drive motor drives wheels through a differential, or a vehicle in which a pair of wheels are driven by at least a pair of drive motors independently of each other. For the latter, two-wheel drive and four-wheel independent drive are contemplated.

The drive motor of the vehicle comprises an internal combustion engine and an electric motor. The drive motor provides a driving torque to the vehicle for running, driving the wheels in motion, and it is controlled by a drive motor controller. In particular, the drive motor controller comprises a motor control unit and a motor drive. The motor control unit and the motor drive can be provided independently from each other, for example, the motor control unit integrated in the control module of the brake system or in the vehicle control unit (VCU). For full electric vehicles or hybrid vehicles using an electric motor as a drive motor, the motor control unit is the motor control unit of the vehicle, and it is the Engine Control Unit (ECU) of the vehicle for an internal combustion engine.

The control module of the brake system can be a control module provided correspondingly to an axle, including an anti-lock braking function (ABS), an electronic stability control function (ESC), an anti-slip regulation function (ASR), and the like.

With the method for braking, the control module of the brake system of the vehicle can obtain a more accurate rotational speed of the wheel, and provide more accurate vehicle state information to the vehicle.

According to the invention, the method for braking further comprises the step of validating with the wheel rotational speed generated from the other one from the rotation speed information of the drive motor and the wheel speed sensor information of the wheel. That is to say, when the wheel rotational speed generated from the rotation speed information of the drive motor is used in the previous step, the wheel rotational speed generated from the wheel speed sensor information will be used in this step for validation; or when the wheel rotational speed generated from the wheel speed sensor information is used in the previous step, the wheel rotational speed generated from the rotation speed information of the drive motor will then be used in this step.

The above validation step ensures the accuracy and credibility of the wheel rotational speed used in the brake system.

Preferably, the method for braking further comprises steps of:
- calculating the deviation of the wheel rotational speed generated from the rotation speed information of the drive motor from that generated from the wheel speed sensor information of the wheel;
- always using the wheel rotational speed generated from the wheel speed sensor information of the wheel when the deviation is larger than a preset value.

The preset value is a value that is set in advance and is for example an absolute value. It serves to limit the range of the deviation of the wheel rotational speed generated from the rotation speed information of the drive motor from that generated from the wheel speed sensor information of the wheel. Thus, when the deviation between the two wheel rotational speeds is lower than the preset value, it is indicated that the deviation is in a pre-given and acceptable range. Then, the wheel rotational speed generated from the rotation speed information of the drive motor is further considered as creditable, and thus can be used. In contrary, when the deviation exceeds the preset value, the wheel rotational speed generated from the rotation speed information of the drive motor is thus considered inaccurate. In this case, the method for braking will always use the wheel rotational speed generated from the wheel speed sensor information of the wheel thereafter, regardless of whether the refresh rate of the wheel speed sensor information of the wheel is lower than that of the rotation speed information of the drive motor.

In addition or alternative to the steps above, the method for braking of the invention preferably further comprises following step: in the case when the refresh rate of the wheel speed sensor information is higher than that of the rotation speed information of the drive motor, the deviation of the wheel rotational speed generated from the wheel speed sensor information from the wheel rotational speed generated from the rotation speed information of the drive motor is lower than the preset value, using the wheel rotational speed generated from the rotation speed information of the drive motor, when the refresh rate of the wheel speed sensor information is lower than that of the rotation speed information of the drive motor.

Then, when the refresh rate of the wheel speed sensor information is higher than that of the rotation speed information of the drive motor, and the deviation of the wheel rotational speed generated from the rotation speed information of the drive motor from the that generated from the wheel speed sensor information is still lower than the preset value, the wheel rotational speed generated from the rotation speed information of the drive motor can be considered as accurate. On this premise, when the refresh rate of the wheel speed sensor information is lower than that of the rotation speed information of the drive motor, the brake system of the invention uses the wheel rotational speed generated from the rotation speed information of the drive motor for example, for controlling whether various vehicle dynamics functions, such as ABS, ASR, ESC and the like, are to be activated.

Further, for vehicle of different power arrangements, the method for braking of the invention can further comprise following steps.

For a vehicle in which the at least one drive motor is at least one pair of drive motors and a pair of drive wheels are driven independently of each other, the method for braking comprises following step so as to generate the rotational speed of the drive wheels with the rotation speed information of the drive motor:
- generating the wheel rotational speed of the drive wheels according to the rotation speed information of the drive motors and the information of a driving torque transmission mechanism between the drive motors and the drive wheels.

It should be noted that the above-mentioned information of the driving torque transmission mechanism is usually pre-determined.

For a vehicle in which the drive motor drives a pair of drive wheels through a differential, the method for braking may further comprises following step to speculate the rotational speed of the drive wheels:
- when the wheel speed sensor information of one drive wheel of the pair of drive wheels is missed, speculating the wheel rotational speed of the drive wheel based on the rotation speed information of the drive motor and the wheel speed sensor information of the other drive wheel.

For a vehicle comprising at least one pair of drive motors and a pair of drive wheels driven independently of each other, the method for braking more preferably may further comprises the step of:
- using the wheel rotational speed of the drive wheel generated from the rotation speed information of the respective drive motor, when the wheel speed sensor information of one of the drive wheels is missed.

For vehicles of different power arrangements, with the above-mentioned preferred steps of the method for braking according to the present invention, when the wheel speed sensor information of the drive wheel is lost, such as information failure or signal transmission interruption of the wheel speed sensor of the drive wheel, the control module of the brake system can still obtain the rotational speed of the driving wheel for later use.

When the control module of the brake system of the vehicle comprises a redundant drive motor control unit, the method for braking of the invention preferably further comprises the steps of:
- controlling the drive motor controller by means of the redundant drive motor control unit when the drive motor controller fails.

The redundant drive motor control unit can be integrated into a control module of the brake system of the vehicle. The redundant drive motor control unit enables at least partial control of the drive motor controller. Thus, if the drive motor controller fails, the method for braking of the invention controls the drive motor controller by means of the redundant drive motor control unit to achieve the control of the operation and stop of the drive motor. Thus, when the drive motor controller fails, the basic driving safety can still be ensured, that is, the operation and stop of the drive motor can be controlled.

The advantageous technical effects obtained by the invention are that in a vehicle with the brake system according to the present invention, the control module of the brake system can always obtain an accurate wheel rotational speed and providing it for the brake system in that the refresh rate of the rotation speed information of the drive motor and the wheel speed sensor information of the wheel are compared and the wheel rotational speeds generated from them are compared by the control module.

The additional features and advantages described herein will be stated in the following detailed description, and will be obvious to a person skilled in the art or will be appreciated by a person skilled in the art by implementing the implementations described herein.

Advantageous developments of the invention result from the claims, the description and the drawings.

The advantages of features and of combinations of a plurality of features mentioned at the beginning of the description only serve as examples and may be used alternatively or cumulatively without the necessity of embodiments according to the invention having to obtain these advantages.

The following applies with respect to the disclosure - not the scope of protection - of the original application and the patent: Further features may be taken from the drawings, in particular from the illustrated designs and the dimensions of a plurality of components with respect to one another as well as from their relative arrangement and their operative connection. The combination of features of different embodiments of the invention or of features of different claims independent of the chosen references of the claims is also possible, and it is motivated herewith. This also relates to features which are illustrated in separate drawings, or which are mentioned when describing them. These features may also be combined with features of different claims. Furthermore, it is possible that further embodiments of the invention do not have the features mentioned in the claims which, however, does not apply to the independent claims of the granted patent.

The number of the features mentioned in the claims and in the description is to be understood to cover this exact number and a greater number than the mentioned number without having to explicitly use the adverb "at least". For example, if an element is mentioned, this is to be understood such that there is exactly one element or there are two elements or more elements. Additional features may be added to these features, or these features may be the only features of the respective product.

The reference signs contained in the claims are not limiting the extent of the matter protected by the claims. Their sole function is to make the claims easier to understand.

### BRIEF DESCRIPTION OF THE DRAWINGS

With reference to the above objects, other technical features and advantages of the present invention will become apparent from the following detailed description with reference to the drawings. The drawings illustrate the preferred embodiments of the present invention by way of example, without limiting the scope of the inventive concept, in which:
- **Fig. 1**: is a diagram schematically showing a relationship between the refresh time of the wheel speed sensor information of a wheel speed sensor in the prior art and the vehicle speed;
- **Fig. 2**: exemplarily shows a relationship between the refresh time of the wheel speed sensor information of the wheel speed sensor of Fig. 1 and the refresh time of the rotation speed information of a drive motor of the drive motor speed sensor and the vehicle speed;
- **Fig. 3A**: schematically illustrates a power arrangement of a vehicle with a brake system according to the present invention;
- **Fig. 3B**: schematically illustrates another power arrangement of a vehicle with a brake system according to the present invention;
- **Fig. 3C**: schematically illustrates yet another power arrangement of a vehicle with a brake system according to the present invention;
- **Fig. 4A**: schematically illustrates a power arrangement of a vehicle with a brake system according to the present invention;
- **Fig. 4B**: schematically illustrates another power arrangement of a vehicle with a brake system according to the present invention;
- **Fig. 4C**: schematically illustrates yet another power arrangement of a vehicle with a brake system according to the present invention;
- **Fig. 5**: shows a flow chart of a process in which a brake system according to the present invention obtains the wheel rotational speed;
- **Fig. 6**: shows a flow chart of another preferable process in which a brake system according to the present invention obtains the wheel rotational speed; and
- **Fig. 7**: shows a flow chart of yet another preferable process in which a brake system according to the present invention obtain the wheel rotational speed.

### DESCRIPTION OF THE DRAWINGS

Specific Mode for Carrying out the Invention:
As described in the beginning of the present application, **Fig. 1** shows a relationship between a refresh time of the wheel speed sensor information of a wheel speed sensor of a wheel of a vehicle in the prior art and the vehicle speed. Refresh rate is the inverse of the refresh time and long refresh time equals low refresh rate.

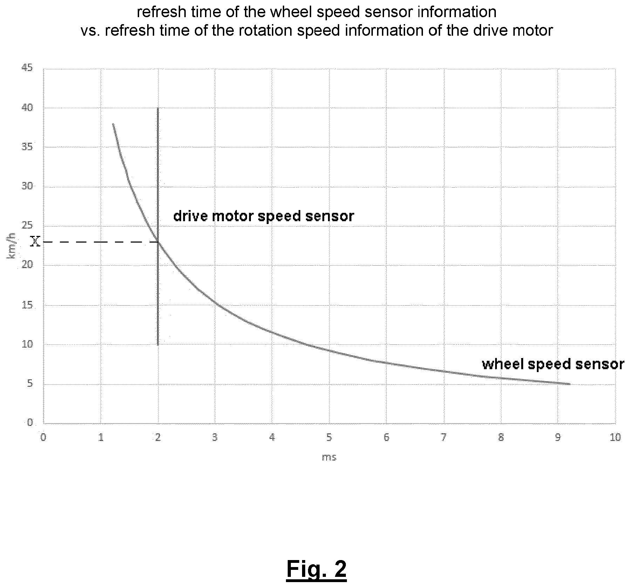

Reference is now made to **Fig. 2.** Fig. 2 further shows the relationship between the refresh time of the rotation speed information of the drive motor sensed by the drive motor speed sensor and the refresh time of the wheel speed sensor information sensed by the wheel speed sensor of the wheel exemplarily shown in Fig. 1 and the relationship between them and the vehicle speed. Refresh rate is the inverse of the refresh time and long refresh time equals low refresh rate. Known from Fig. 2, the refresh rate of the rotation speed information of the drive motor sensed by the drive motor speed sensor is independent of the vehicle speed, unlike the characteristic that the refresh rate of the wheel speed sensor information of the wheel speed sensor lowers as the vehicle speed decreases. Therefore, when the vehicle speed reaches X indicated in the figure, the refresh rate of the rotation speed information sensed by the drive motor speed sensor is the same as the refresh rate of the wheel speed sensor information sensed by the wheel speed sensor of the wheel. Thereafter, as the vehicle speed further decreases, the refresh rate of the rotation speed information of the drive motor sensed by the drive motor speed sensor will be higher than the refresh rate of the wheel speed sensor information sensed by the wheel speed sensor of the wheel. Then, principally, it may be considered that when the vehicle speed is higher than X, the wheel rotational speed generated from the rotation speed information of the drive motor provided by the drive motor speed sensor will reflect the dynamic information of the wheel more realistically than the wheel rotational speed generated from the wheel speed sensor information, and therefore the wheel rotational speed thus obtained can also be considered to be more accurate. It should be noted that the wheel rotational speed of the wheel referred to herein is expressed in radians/second (rad/s).

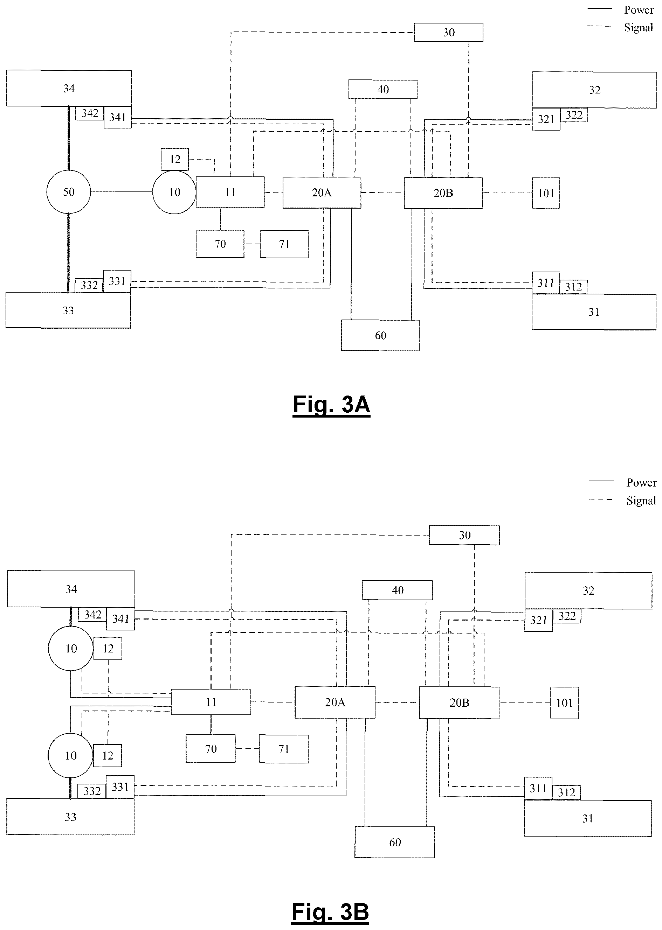

The inventors of the present application thus propose a brake system as exemplarily shown in **Figs. 3A to 4C****.**

The brake system will be described by way of example with reference to Fig. 3A below. The brake system comprises two control modules 20A, 20B and electromechanical brakes 311, 321, 331, 341 providing braking force to the wheels 31, 32, 33, 34, wherein the control modules 20A, 20B are respectively arranged in correspondence to the two axles of the vehicle, and they control and/or supply power to the electromechanical brakes 311, 321, 331, 341 provided at the two ends of the respective axles. The control modules 20A, 20B may be installed on the vehicle as individually packaged devices. However, it is conceivable for a person skilled in the art that the internal elements of the control modules could also be installed at different locations of the vehicle in a non-independent packaging manner, and the packaging manner and installation locations can be adjusted according to the actual layout of the vehicle as long as the control of and/or the power supply to the electromechanical brakes can be achieved. At least one control module 20A, 20B include, for example, an anti-lock braking module (ABS), an electronic stability control module (ESC), an anti-slip regulation function (ASR), and the like.

The control module 20A, 20B requires relatively accurate rotational speed of the wheels for determination so as to perform the above-described functions. For example, during braking, the control module 20A, 20B needs to monitor the rotational speed of the wheels in real time to determine whether the wheel has a tendency to lock, and accordingly keeps the brake applied by the electromechanical brake of the corresponding wheel from increasing or reduces the brake that has already been applied.

The electromechanical brakes 311, 321, 331 and 341 provided at the wheel ends of the vehicle for provide a braking force to each of the wheels comprise a brake motor for generating a braking force, and a mechanical transmission mechanism driven by the brake motor. In the case of a disc brake, the brake motor converts electrical power into mechanical energy so as to drive the mechanical transmission mechanism to push a brake pad towards or away from a brake disc to generate a desired braking force.

In the vehicle shown in Figs. 3A to 4C, the control module 20B of the front axle forms a circuit with the electromechanical brakes 311, 321 of the two wheels 31, 32 of the front axle, and the control module 20A of the rear axle forms a circuit with the electromechanical brakes 331, 341 of the two wheels 33, 34 of the rear axle.

Alternatively, not shown in the figures, the front axle control module 20B can constitute a circuit with the electromechanical brakes 311, 321, 331, 341 of the wheels 31-34 of the front and rear axles, and the rear axle control module 20A can also constitute a circuit with the electromechanical brakes 311, 321, 331, 341 of the wheels 31-34 of the front and rear axles. Thus, a fully redundant circuit is created, and when one of the control modules 20A, 20B fails to control the electromechanical brakes due to a failure, the control module in the other circuit can instead control the corresponding electromechanical brakes as needed to apply brake, thereby providing safety redundancy for the vehicle.

The vehicle has a drive motor 10, which may be an electric motor or an internal combustion engine, and the drive motor 10 is controlled by a drive motor controller 11.

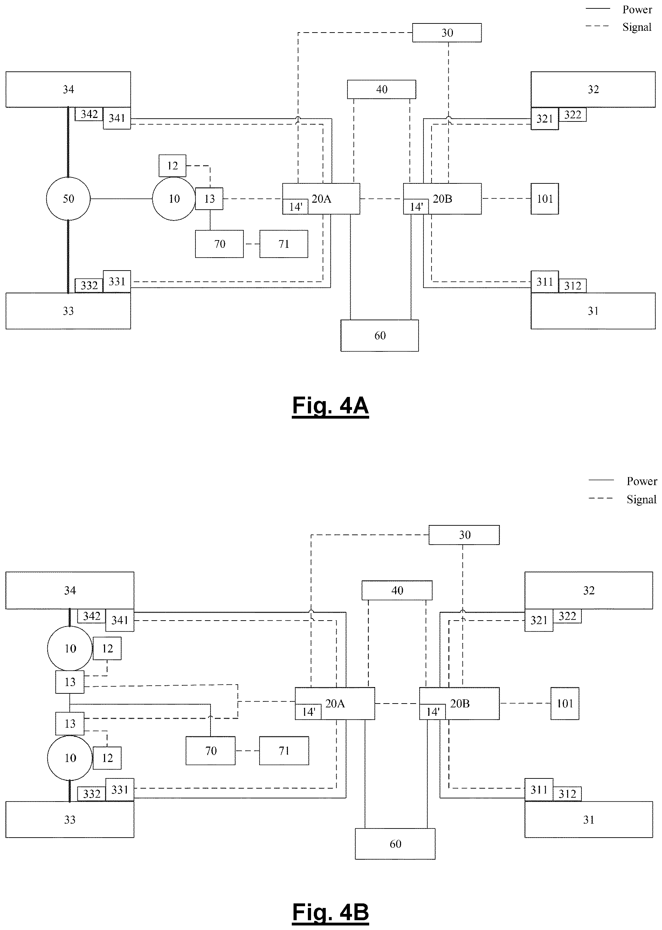

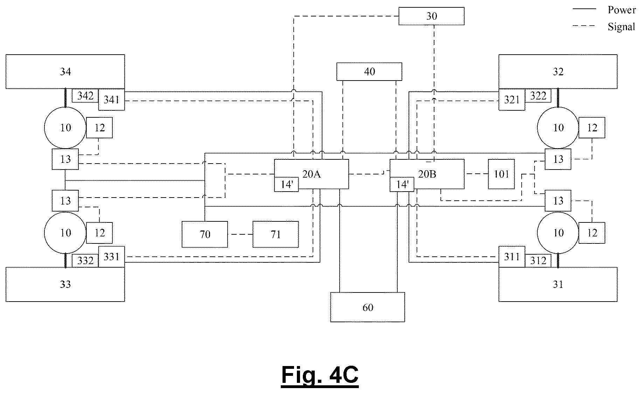

In the context of the present invention, unless otherwise specified, the drive motor 10 can be either an electric motor or an internal combustion engine, and the drive motor controller 11 is a controller of the electric motor or an Engine Control Unit (ECU) of the internal combustion engine. Taken an electric motor as an example, the drive motor controller 11 also includes a motor drive 13 (see Figs. 4A to 4C) and a motor control unit. The motor drive 13 and the motor control unit can be provided separately. The motor drive 13 is for example mainly composed of a three-phase bridge circuit, and is used to drive the drive motor 10 according to a low current control signal from the motor control unit. The motor control unit completes the logic and digital control of the drive motor 10, and a logic circuit is constructed therein, and can control it through an interface of a higher level. For example, the motor control unit can receive a control signal from the control module 20A, 20B of the brake system or from the Vehicle Control Unit (VCU), or can be integrated in the control module 20A, 20B of the brake system or in the Vehicle Control Unit (VCU). In addition, it can be noted in Figs. 3A to 4C that the control module 20A and the control module 20B are communicated with each other, such that when one of them, for example, the control module 20A fails, the control module 20B can perform a control of the drive motor controller 11 instead.

The shown vehicle further includes:
- wheel speed sensors 312, 322, 332, 342 provided correspondingly with each of the wheels 31, 32, 33, 34 of the vehicle for monitoring the wheel speed, wherein the wheel speed sensor information sensed by the wheel speed sensors are send to at least one of the control modules 20A, 20B;
- a motor speed sensor 12 for detecting the rotation speed of the drive motor 10, wherein the rotation speed information of the drive motor sensed by the motor speed sensor 12 is also sent to at least one of the control modules 20A, 20B;
- an accelerator pedal 30 through which the driver's intention to accelerate is input and transmitted to the drive motor controller 11;
- a brake pedal 40 coupled respectively to the control modules 20A and 20B to receive the driver's braking operation and transmit it to the control modules 20A and 20B;
- a differential 50, which allows wheels 33, 34 to rotate at different speed;
- a charging power supply 60 electrically connected to the control modules 20A and 20B; and
- when the drive motor 10 is an electric motor, the vehicle further comprises a power battery 70 and a battery management system 71, for supplying power to the motor.

With a system architecture shown in the embodiments of the present invention, the control module 20A and/or 20B can obtain external information including the state of the drive motor 10, the wheel speed sensors 312, 322, 332, 342, the accelerator pedal 30, and the unmanned driving system 101, so as to determine the driving state of the vehicle more accurately, such that a correction can be made when a driving torque error occurs, so as to timely activate the vehicle dynamics control function or auxiliary driving function, such as anti-slip regulation, electronic stability control, emergency brake and the like.

In the embodiment shown in Fig. 3A, the drive motor 10 of the shown vehicle drives the wheels 33 and 34 through a differential 50.

In the embodiment shown, the electrical energy consumed by the brake system is derived from a recharging power source 60, which may be independent of the power source of the vehicle (e.g., the power battery 70 used to drive the drive motor of the vehicle and/or the generator or hub generator of the vehicle), and the recharging power source 60 is charged from the power source of the vehicle by voltage conversion or other means known to a person skilled in the art. However, according to an embodiment, the recharging power source 60 may also be a power battery 70 onboard the vehicle for powering the drive system of the vehicle or a storage battery for powering electrical appliances on board the vehicle, in which way the number of power supplies required in the vehicle can be reduced. The recharging power source 60 is electrically coupled to the control modules 20A and 20B to supply power to the control modules 20A and 20B, and to supply power to the brake motors of the electromechanical brake 311, 321, 331, 341 provided at the wheel ends through the control modules 20A and 20B to generate a braking force. In one embodiment, the control modules 20A, 20B can each comprise a power supply unit charged by the recharging power source 60, and the output voltage and current thereof can be higher than the recharging power source 60 to adapt to the recharging power source 60 and to the high-power brake motors of the electromechanical brakes 311, 321, 331, 341 that cannot be driven by the recharging power source 60 and its associated circuits, so as to provide sufficient braking force to adapt to large commercial vehicles. In one embodiment, the power supply unit may use any type of capacitor-based power supplies, wherein at least one of the capacitor-based power supplies is a supercapacitor or a supercapacitor bank consisting of a plurality of supercapacitor units; the recharging power source 60 charges the power supply unit with a low voltage, for example, the same 12 V/24 V voltage as the vehicle circuit, and the power supply unit supplies the brake motors of the electromechanical brakes 311, 321, 331, 341 with a high voltage, for example, 48 V or higher, thereby constituting a more reliable, stable and redundant power supply architecture.

A person skilled in the art will understand that, in addition to a centralized arrangement as shown in Fig. 3A, wherein each electromechanical brake 311, 321, 331, 341 is supplied with power from a single recharging power battery 60 through two control modules 20A and 20B, it is also possible that two recharging power sources are provided in a one-to-one correspondence with the control modules 20A and 20B, and power is supplied to corresponding power supply units in the control modules 20A and 20B with the two recharging power sources, respectively.

In other embodiments, a person skilled in the art may also derive the energy required to drive the brake motor in other means.

In the shown power arrangement, the control module 20A is configured such that when the wheel speed sensor, for example 342, of one of the two drive wheels 33, 34 is broken, the control module 20A speculates the rotational speed of the drive wheel 34 based on the rotation speed information of the drive motor 10 sensed by the motor speed sensor 12 of the drive motor 10 and the wheel speed sensor information sensed by the wheel speed sensor 332 of the other drive wheel 33.

It should be noted that the brake system shown in Fig. 3A optionally further comprises an unmanned driving system 101 in communication with control module 20B and/or control module 20A. The unmanned driving system 101 can be any of the auxiliary driving systems and/or autonomous driving systems of the various unmanned driving systems known in the art that improve driving safety, which may create a request for an adjustment in the driving torque or braking torque during operation due to unmanned operation.

Now turning to Fig. 3B, Fig. 3B schematically shows another power arrangement of a vehicle with a brake system according to the present invention. It differs from the power arrangement shown in Fig. 3A in that the wheels 33 and 34 of the vehicle are each provided with a drive motor 10, each drive motor 10 in turn being provided with a separate motor speed sensor 12, and both drive motors 10 and motor speed sensors 12 are exemplarily coupled to the drive motor controller 11. In this power arrangement, the rear wheels 33, 34 are driven independently of each other. During running of the vehicle, the rotation speed information of the drive motor 10 sensed by the motor speed sensor 12 of each drive motor 10 and the wheel speed sensor information sensed by the wheel speed sensors 312, 322, 332, 342 are transmitted to the control module 20A.

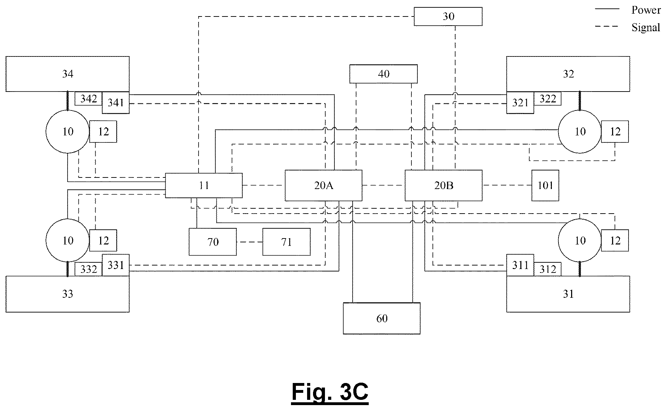

Fig. 3C shows yet another power arrangement of a vehicle having a brake system according to the present invention. Being different from the power arrangements shown in Figs. 3A and 3B described above, the wheels 31, 32, 33, 34 of the vehicle are respectively provided with one drive motor 10, and each drive motor 10 is provided with a separate motor speed sensor 12. The four drive motors 10 and motor speed sensors 12 are all exemplarily connected with the same drive motor controller 11. As a result, all four wheels 31, 32, 33, 34 of the vehicle are driven independently of each other. During running of the vehicle, the rotation speed information of the drive motor 10 sensed by the motor speed sensor 12 of each of the four drive motors 10 and the wheel speed sensor information sensed by the wheel speed sensors 312, 322, 332, 342 are respectively transmitted to the control modules 20A and 20B.

In a vehicle with the power arrangement shown in Fig. 3B or 3C, the control module 20A and/or 20B of the brake system is configured to generate the wheel rotational speed of the drive wheels according to the rotation speed information of the drive motors 10 sensed by the motor speed sensors 12 and the information of a driving torque transmission mechanism between the drive motors 10 and the drive wheels. The driving torque transmission mechanism is not shown here, and the information of the driving torque transmission mechanism is predetermined and it can be obtained by the control modules 20A, 20B or is input therein in advance.

Further, in the vehicle with the power arrangement shown in Fig. 3B or 3C, when for example the sensor information of the wheel speed sensor 332 of the drive wheel, for example, the rear wheel 33 is missing, such as due to a failure of the wheel speed sensor 332 or a transmission line interruption, the rotational speed of the rear wheel 33 can be obtained in that the control module 20A generates the rotational speed of the rear wheel 33 with the rotation speed information of the drive motor 10 sensed by the motor speed sensor 12 of the drive motor 10 that is corresponding to the rear wheel 33. The same applies to the case where the wheel speed sensor information of the front wheels 31, 32 shown in Fig. 3C is missing.

Therefore, the brake system according to the present invention is applicable to vehicles with various power arrangements including: the power system with a single drive motor; a power arrangement with a pair of drive motors the corresponding wheels of which are driven independently of each other; and a power arrangement in which the drive motor and the wheel are provided in a one-to-one relationship, each wheel being driven independently.

As shown in Figs. 4A to 4C, a redundant motor control unit 14' can also be integrated in the control modules 20A, 20B of the brake system. Thus, when the drive motor controller 11 fails, the control modules 20A, 20B of the brake system can control the motor drive 13 through this redundant motor control unit 14' to control the operation and stop, i.e. the activation and the deactivation of the drive motor 10. However, in this embodiment, the redundant motor control units 14' integrated in the control modules 20A, 20B may not support functions such as energy recovery, hybrid braking and the like, in order to reduce the cost of the control modules 20A, 20B. Alternatively, in another embodiment of the invention, the redundant motor control unit 14' integrated in the control modules 20A, 20B may also support the additional functions described above.

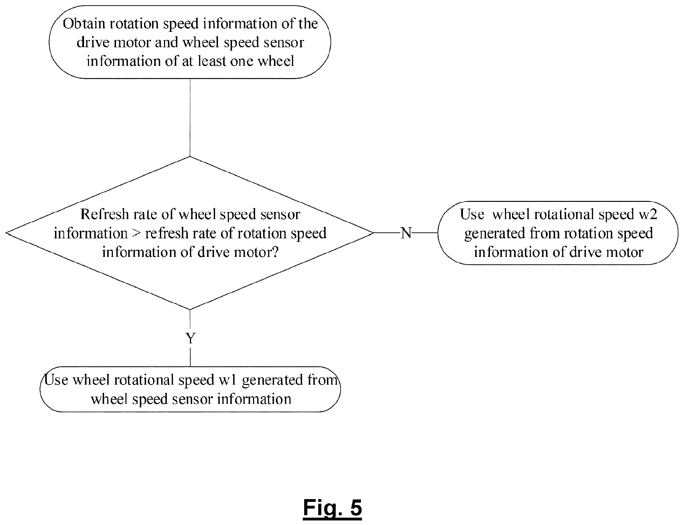

The process in which the control module 20A, 20B of the brake system of the invention obtains the wheel rotational speed of a wheel is now to be explained in detail with reference to Figs. 5 to 7.

The basic process shown in **Fig. 5** will be explained by taking the power arrangement shown in Fig. 3A as an example. The control module 20A obtains the rotation speed information of the drive motor 10 sensed by the motor speed sensor 12 of the drive motor 10 and the wheel speed sensor information provided by for example the wheel speed sensors 332 of at least one wheel, such as the wheel 33. Then, the control module 20A compares the refresh rate of the rotation speed information of the drive motor 10 and that of the wheel speed sensor information of the wheel speed sensors 332, 342. If the refresh rate of the wheel speed sensor information is higher than the that of the rotation speed information of the drive motor 10 with the comparison of the control module, the control module 20A generates the rotational speed w1-33 of the wheel 33 by calculation and/or signal processing of the wheel speed sensor information, the rotational speed is later sued for performing the functions of the anti-lock brake function, electronic stability control function, anti-slip regulation function and the like. Otherwise, the control module 20A uses the rotational speed w2-33 of the wheels 33, which is generated by calculating and/or signal processing the rotation speed of the drive motor 10, for the vehicle dynamics functions described above.

The above-described process is also applicable to a vehicle having the power arrangement shown in Fig. 3B or 3C, and it should be noted that the refresh rate of the wheel speed sensor information must be compared with the refresh rate of the rotation speed information of the corresponding drive motor 10.

In the discussion below, the two preferable processes described are also applicable to a vehicle having the power arrangement shown in Fig. 3B or 3C, unless otherwise noted.

In addition, since the control module 20A and the control module 20B communicate with each other in the illustrated system architecture, the particular determination can also be done by the control module 20B, or the wheel speed sensor information sensed by the wheel speed sensors 312, 322 of the two wheels 31, 32 of the front axle may be sent to the control module 20B corresponding to the front axle.

Based on the process discussed above, the control module 20A can also validate the wheel rotational speed used above with the wheel rotational speed w of the wheel 33 generated from the information of the lower refresh rate. When, for example, the refresh rate of the wheel speed sensor information sensed by the wheel speed sensor 332 of the wheel 33 is higher than the refresh rate of the rotation speed information of the drive motor 10 sensed by the motor speed sensor 12 of the drive motor 10, the control module 20A uses the rotational speed w1-33 of the wheel generated from the wheel speed sensor information for the subsequent operation of vehicle dynamics functions such as ABS, ESC, ASR and the like, and validates the aforementioned rotational speed w1-33 of the wheel with the wheel rotational speed w2-33 generated from the rotation speed information of the drive motor 10 or vice versa. If the result of the validation is correct, for example, the two rotational speeds w1-33 and w2-33 of the wheel 33 do not differ from each other greatly or they are the same, the rotational speed of the wheel used by the control module 20A is considered credible. Otherwise, there may be sensor failure and the like, thus requiring further inspection of the respective sensor, for example.

Besides, other vehicle information can be used to verify or validate the wheel speed sensor information and motor speed sensor, thereby to further improve the accuracy and credibility. For example, the calculated reference speed of the vehicle based on the inertia (acceleration) sensor information, GPS information, etc.

Further, the control modules 20A, 20B of the brake system may also have two preferable processed explained in detail below.

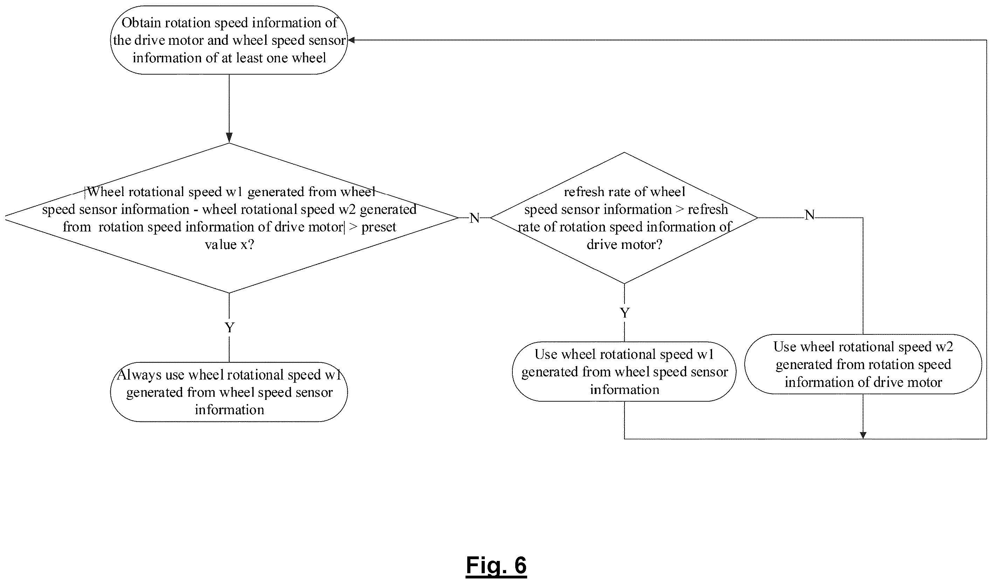

**Fig. 6** shows a preferable process. Still taking the arrangement shown in Fig. 3A as an example, the control module 20A obtains the rotation speed of the drive motor 10 sensed by the motor speed sensor 12 of the drive motor 10 and the wheel speed sensor information sensed by the wheel speed sensor 332 of at least one wheel, for example, the wheel 33, and compares the wheel rotational speeds w1-33 and w2-33 generated from those two kinds of information, finds the absolute value of the difference between them, and compares this difference with a preset value x set in advance. x is here a fixed value which is set in advance. In particular, the preset value may also be an absolute value expressed in radians/second. If the difference between the two is larger than x, the wheel rotational speed w2-33 of the wheel 33 generated from the rotation speed information of the drive motor cannot be considered as reliable as the wheel rotational speed w1-33 of the wheel 33 generated from the wheel speed sensor information of the wheel 33. In this case, the control module 20B will always use the rotational speed w2-33 of the wheel 33 generated from the wheel speed sensor information of the wheel speed sensor 332 regardless of whether the refresh rate of the wheel speed sensor information is higher than that of the rotation speed information of the drive motor 10. Otherwise, if the absolute value of the difference between w1-33 and w2-33 is smaller than the preset value x, the control module 20B further compares the refresh rate of the two kinds of information, if the refresh rate of the wheel speed sensor information is higher, the control module 20B will use the rotational speed w1-33 of the wheel 33 generated from the wheel speed sensor information, otherwise the control module 20B will use the rotational speed w2-33 of the wheel 33 generated from the rotation speed information of the drive motor 10. It should be noted that for the latter case, i.e., the case in which the difference between the two rotational speeds of the wheel is less than the preset value, and thus the rotational speed of the wheel generated from the rotation speeds of the drive motor is used, the control module 20B will repeat the above-described process.

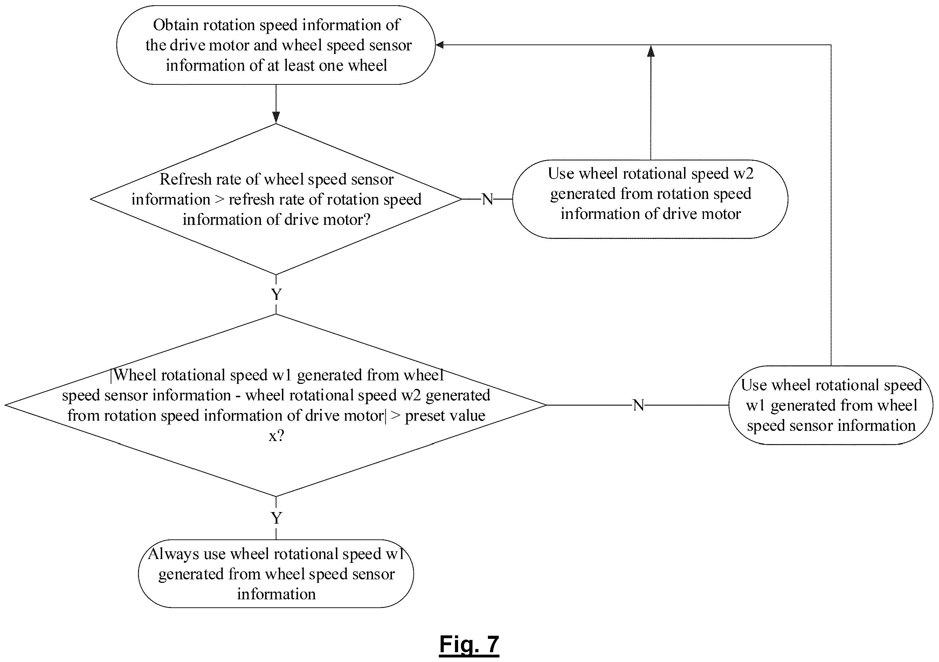

**Fig. 7** shows another preferable process. Here, the power arrangement shown in Fig. 3A will still be described by way of example. The control module 20A is also constructed to obtain the rotation speed information of the drive motor 10 sensed by the motor speed sensor 12 of the drive motor 10 and the wheel speed sensor information provided by for example the wheel speed sensor 332 of at least one wheel, such as the wheel 33. The control module 20A then compares the refresh rates of the two types of information. If the refresh rate of the rotational speed information of the drive motor is higher, then the rotational speed of the wheel 33 generated by the rotation speed information of the drive motor is considered to be more accurate. Therefore, the control module 20A uses the wheel rotational speed of the wheel 33 generated from the rotation speed information of the drive motor 10. Otherwise, the control module 20A further determines whether the absolute value of the difference between the wheel rotational speed w1-33 of the wheel generated from the wheel speed sensor information and the wheel rotational speed w2-33 of the wheel generated from the rotation speed information of the drive motor is greater than a preset value x. x is here a fixed value which is set in advance. In particular, the preset value may also be an absolute value expressed in radians/second. When the absolute value of the difference between the wheel rotational speed w1-33 and w2-33 is greater than the preset value x, it is considered that the deviation of w2-33 from w1-33 is too great, and the wheel rotational speed w2-33 of the wheel 33 generated from the rotation speed information of the drive motor 10 is not credible. Then the control module 20A will always use the wheel rotational speed w1-33 generated from the wheel speed sensor information regardless of which of the refresh rate of both the wheel speed sensor information and the rotation speed information of the drive motor 10 is higher.

In contrast, when the absolute value of the difference between the wheel rotational speed w1-33 and w2-33 is less than the preset value x, it is considered that the wheel rotational speed w2-33 of the wheel 33 generated from the rotation speed information of the drive motor 10 is still credible. At this time, since it is previously determined that the refresh rate of the wheel speed sensor information is higher than that of the rotation speed information of the drive motor, the wheel rotational speed w1-33 generated from the wheel speed sensor information will still be used in this determination, but the control module 20A will still repeat the above determination process in the subsequent process of monitoring the wheel rotational speed of the wheel. In other words, since it can be determined that the wheel rotational speed w2 of the wheel generated from the rotation speed information of the drive motor is credible, when the refresh rate of the rotation speed information of the drive motor is higher than the refresh rate of the wheel speed sensor information, the wheel rotational speed w2 of the wheel generated from the rotation speed information n of the drive motor is used, and the above process is continuously repeated, that is to say, the rotation speed information of the drive motor and the wheel speed sensor information of at least one wheel are obtained and the refresh rates of both are compared.

The previous description of the disclosure is provided to enable any person skilled in the art to make or use the disclosure. Various modifications to the disclosure will be apparent to a person skilled in the art, without departing from the scope of the invention, as defined by the appended claims.

### LIST OF REFERENCE NUMERALS

- 10: drive motor
- 11: drive motor controller
- 12: motor speed sensor
- 13: motor drive
- 14: motor control unit
- 14': redundant motor control unit
- 20A: control module
- 20B: control module
- 30: accelerator pedal
- 31: right front wheel
- 32: left front wheel
- 33: right rear wheel
- 34: left rear wheel
- 311: electromechanical brake
- 312: wheel speed sensor
- 321: electromechanical brake
- 322: wheel speed sensor
- 331: electromechanical brake
- 332: wheel speed sensor
- 341: electromechanical brake
- 342: wheel speed sensor
- 40: brake pedal
- 50: differential
- 60: recharging power source
- 70: power battery
- 71: battery management system
- 101: unmanned driving system

## Claims

1. A brake system for a vehicle,
the brake system comprises a control module (20A, 20B) and an electromechanical brake (311, 321, 331, 341) providing braking force to a wheel (31, 32, 33, 34), wherein the control module
a) receives rotation speed information of at least one drive motor (10), which provides a driving torque to the vehicle, and wheel speed sensor information of at least one wheel (31, 32, 33, 34),
**characterized in that** the control module
b) compares a refresh rate of the rotation speed information of the drive motor (10) and a refresh rate of the wheel speed sensor information of the wheel (31, 32, 33, 34),
c) generates a wheel rotational speed by use of the information of a higher refresh rate and
d) is configured such that, when the wheel rotational speed generated from the rotation speed information of the drive motor (10) or that generated from the wheel speed sensor information of the wheel is used, it will use the wheel rotational speed generated from the other one for validation.

2. The brake system according to claim 1, **wherein** the wheel rotational speed generated from the wheel speed sensor information will always be used when the deviation of the wheel rotational speed generated from the rotation speed information of the drive motor (10) from that generated from the wheel speed sensor information of the wheel is larger than a preset value.

3. The brake system according to claim 1 or 2, **wherein** the control module (20A, 20B) is configured such that in the case when the refresh rate of the wheel speed sensor information is higher than that of the rotation speed information of the drive motor (10), the deviation of the wheel rotational speed generated from the wheel speed sensor information from the wheel rotational speed generated from the rotation speed information of the drive motor (10) is smaller than a preset value, when the refresh rate of the wheel speed sensor information is lower than that of the rotation speed information of the drive motor (10), it will use the wheel rotational speed generated from the rotation speed information of the drive motor.

4. The brake system according to any one of claims 1 to 3, **wherein** the drive motor (10) drives a pair of drive wheels (33, 34) through a differential (50), and the control module (20A, 20B) is configured such that when the wheel speed sensor information of one drive wheel (33; 34) of the pair of drive wheels is missed, the rotational speed of the drive wheel will be speculated based on the rotation speed information of the drive motor (10) and the wheel speed sensor information of the other drive wheel (34; 33).

5. The brake system according to any one of claims 1 to 3, **wherein** the at least one drive motor (10) is at least one pair of drive motors, and wherein a pair of drive wheels (33, 34; 31, 32) of the vehicle are driven independently from each other.

6. The brake system according to claim 5, **wherein** the control module (20A, 20B) is configured to generate the rotational speed of the drive wheels (33, 34; 31, 32) according to the rotation speed information of the drive motors (10) and the information of a driving torque transmission mechanism between the drive motors (10) and the drive wheels (33, 34; 31, 32).

7. The brake system according to claim 5, **wherein** the control module (20A, 20B) is configured such that when the wheel speed sensor information of one drive wheel (33, 34; 31, 32) is missed, it will use the rotational speed of the drive wheel generated from the rotation speed information of the respective drive motor (10).

8. The brake system according to any one of the preceding claims, **wherein** the control module (20A, 20B) comprises a redundant drive motor control unit (14') which can at least partly achieve the control of the motor drive (13).

9. The brake system according to any one of the preceding claims, **wherein** the brake system comprises two control modules (20A, 20B), each of which constitutes a brake circuit with at least one pair of electromechanical brakes (311, 321; 331, 341).

10. A method for braking a vehicle, a brake system of the vehicle comprising a control module (20A, 20B) and an electromechanical brake (311, 321, 331, 341) providing braking force to a wheel (31, 32, 33, 34), wherein the control module (20A, 20B) receives rotation speed information of at least one drive motor (10), which provides a driving torque to the vehicle, and wheel speed sensor information of at least one wheel (31, 32, 33, 34), the method comprising following steps:
a) comparing the refresh rate of the rotation speed information of the drive motor (10) and the refresh rate of the wheel speed sensor information of the wheel (31, 32, 33, 34);
b) generating a rotational speed of the wheel from the one of a higher refresh rate from the rotation speed information of the drive motor (10) and the wheel speed sensor information of the wheel (31, 32, 33, 34); and
c) validating the generated rotational sped of the wheel with a wheel rotational speed of the wheel generated from the other one from the rotation speed information of the drive motor (10) and the wheel speed sensor information of the wheel (31, 32, 33, 34).

11. The method for braking a vehicle according to claim 10, the method further comprising following steps:
calculating the deviation of the wheel rotational speed generated from the rotation speed information of the drive motor (10) from that generated from the wheel speed sensor information of the wheel (31, 32, 33, 34);
always using the wheel rotational speed generated from the wheel speed sensor information of the wheel (31, 32, 33, 34) when the deviation is larger than a preset value.

12. The method for braking a vehicle according to claim 10 or 11, the method further comprising following step:
in the case when the refresh rate of the wheel speed sensor information is higher than that of the rotation speed information of the drive motor (10), the deviation of the wheel rotational speed generated from the wheel speed sensor information from the wheel rotational speed generated from the rotation speed information of the drive motor (10) is smaller than a preset value, using the wheel rotational speed generated from the rotation speed information of the drive motor (10), when the refresh rate of the wheel speed sensor information is lower than that of the rotation speed information of the drive motor (10).

13. The method for braking a vehicle according to any one of claims 10 to 12, **wherein** the drive motor (10) drives a pair of drive wheels (33, 34) through a differential (50), the method further comprising following steps:
speculating the wheel rotational speed of a drive (33; 34) wheel based on the rotation speed information of the drive motor (10) and the wheel speed sensor information of the other drive wheel (34; 33), when the wheel speed sensor information of one drive wheel (33; 34) of the pair of drive wheels is missed.

14. The method for braking a vehicle according to any one of claims 10 to 12, **wherein** the at least one drive motor (10) is at least one pair of drive motors, and wherein a pair of drive wheels (33, 34; 31, 32) of the vehicle are driven independently from each other, the method further comprising following step:
generating the wheel rotational speed of the drive wheels (33, 34; 31, 32) according to the rotation speed information of the drive motors (10) and the information of a driving torque transmission mechanism between the drive motors (10) and the drive wheels (33, 34; 31, 32).

15. The method for braking a vehicle according to claim 14, the method further comprising following step:
using the wheel rotational speed of the drive wheel (33, 34; 31, 32) generated from the rotation speed information of the respective drive motor (10), when the wheel speed sensor information of one drive wheel (33, 34; 31, 32) is missed.

16. The method for braking a vehicle according to any one of claims 10 to 15, **wherein** the control module (20A, 20B) comprises a redundant drive motor control unit (14'), the method further comprising following step:
controlling a motor drive (13) by means of the redundant drive motor control unit (14') when the drive motor controller (11) fails.

## Patentansprüche

1. Ein Bremssystem für ein Fahrzeug,
das Bremssystem umfasst ein Steuermodul (20A, 20B) und eine elektromechanische Bremse (311, 321, 331, 341), die eine Bremskraft auf ein Rad (31, 32, 33, 34) ausübt, wobei das Steuermodul
a) Drehgeschwindigkeitsinformationen mindestens eines Antriebsmotors (10), der ein Antriebsmoment für das Fahrzeug bereitstellt, und Raddrehzahlsensorinformation mindestens eines Rades (31, 32, 33, 34) empfängt,
**dadurch gekennzeichnet, dass** das Steuermodul
b) eine Aktualisierungsrate der Drehzahlinformation des Antriebsmotors (10) und eine Aktualisierungsrate der Raddrehzahlsensorinformation des Rades (31, 32, 33, 34) vergleicht,
c) eine Raddrehzahl unter Verwendung der Information einer höheren Aktualisierungsrate erzeugt und
d) so konfiguriert ist, dass es, wenn die aus der Drehzahlinformation des Antriebsmotors (10) oder die aus der Raddrehzahlsensorinformation des Rades erzeugte Raddrehzahl verwendet wird, die aus der jeweils anderen Information erzeugte Raddrehzahl zur Validierung verwendet.

2. Bremssystem nach Anspruch 1, **wobei** die aus der Raddrehzahlsensorinformation erzeugte Raddrehzahl immer dann verwendet wird, wenn die Abweichung der aus der Drehzahlinformation des Antriebsmotors (10) erzeugten Raddrehzahl von der aus der Raddrehzahlsensorinformation erzeugte Raddrehzahl des Rades größer als ein voreingestellter Wert ist.

3. Bremssystem nach Anspruch 1 oder 2, **wobei** das Steuermodul (20A, 20B) so konfiguriert ist, dass in dem Fall, dass die Aktualisierungsrate der Raddrehzahlsensorinformation höher ist als die der Drehzahlinformation des Antriebsmotors (10), die Abweichung der aus der Raddrehzahlsensorinformation erzeugten Raddrehzahl von der aus der Drehzahlinformation des Antriebsmotors (10) erzeugten Raddrehzahl kleiner als ein voreingestellter Wert ist, wenn die Aktualisierungsrate der Raddrehzahlsensorinformation niedriger als die der Drehzahlinformation des Antriebsmotors (10) ist, es die aus der Drehzahlinformation des Antriebsmotors erzeugte Raddrehzahl verwenden wird.

4. Bremssystem nach einem der Ansprüche 1 bis 3, **wobei** der Antriebsmotor (10) ein Paar von Antriebsrädern (33, 34) über ein Differential (50) antreibt und das Steuermodul (20A, 20B) so konfiguriert ist, dass, wenn die Raddrehzahlsensorinformation eines Antriebsrads (33; 34) des Paars von Antriebsrädern fehlt, die Drehgeschwindigkeit des Antriebsrads auf der Grundlage der Drehgeschwindigkeitsinformation des Antriebsmotors (10) und der Raddrehzahlsensorinformation des anderen Antriebsrads (34; 33) spekuliert wird.

5. Bremssystem nach einem der Ansprüche 1 bis 3, **wobei** der mindestens eine Antriebsmotor (10) mindestens ein Paar von Antriebsmotoren ist, und wobei ein Paar von Antriebsrädern (33, 34; 31, 32) des Fahrzeugs unabhängig voneinander angetrieben wird.

6. Bremssystem nach Anspruch 5, **wobei** das Steuermodul (20A, 20B) so konfiguriert ist, dass es die Drehzahl der Antriebsräder (33, 34; 31, 32) entsprechend der Drehzahlinformation der Antriebsmotoren (10) und der Information eines Antriebsmoment-Übertragungsmechanismus zwischen den Antriebsmotoren (10) und den Antriebsrädern (33, 34; 31, 32) erzeugt.

7. Bremssystem nach Anspruch 5, **wobei** das Steuermodul (20A, 20B) so konfiguriert ist, dass es, wenn die Raddrehzahlsensorinformation eines Antriebsrades (33, 34; 31, 32) fehlt, die aus der Drehzahlinformation des jeweiligen Antriebsmotors (10) erzeugte Drehzahl des Antriebsrades verwendet.

8. Bremssystem nach einem der vorhergehenden Ansprüche, **wobei** das Steuermodul (20A, 20B) eine redundante Antriebsmotor-Steuereinheit (14) umfasst', die zumindest teilweise die Steuerung des Motorantriebs (13) übernehmen kann.

9. Bremssystem nach einem der vorhergehenden Ansprüche, **wobei** das Bremssystem zwei Steuermodule (20A, 20B) umfasst, von denen jedes einen Bremskreis mit mindestens einem Paar elektromechanischer Bremsen (311, 321; 331, 341) bildet.

10. Verfahren zum Bremsen eines Fahrzeugs, ein Bremssystem des Fahrzeugs umfassend ein Steuermodul (20A, 20B) und eine elektromechanische Bremse (311, 321, 331, 341) , die eine Bremskraft auf ein Rad (31, 32, 33, 34) ausübt, wobei das Steuermodul (20A, 20B) Drehzahlinformationen von mindestens einem Antriebsmotor (10), der ein Antriebsmoment für das Fahrzeug bereitstellt, und Raddrehzahlsensorinformationen von mindestens einem Rad (31, 32, 33, 34) empfängt, wobei das Verfahren die folgenden Schritte umfasst:
a) Vergleichen der Aktualisierungsrate der Drehzahlinformation des Antriebsmotors (10) und der Aktualisierungsrate der Raddrehzahlsensorinformation des Rades (31, 32, 33, 34)
b) Erzeugen einer Raddrehzahl aus einer höheren Aktualisierungsrate aus der Rotationsgeschwindigkeitsinformation des Antriebsmotors (10) und der Drehzahlinformation des Rades (31, 32, 33, 34); und
c) Validieren der erzeugten Raddrehzahl mit einer Raddrehzahl des Rades, die von dem anderen aus der Drehzahlinformation des Antriebsmotors (10) und der Raddrehzahlsensorinformation des Rades (31, 32, 33, 34) erzeugt wurde.

11. Verfahren zum Bremsen eines Fahrzeugs nach Anspruch 10, wobei das Verfahren ferner die folgenden Schritte umfasst:
Berechnen der Abweichung der aus der Drehzahlinformation des Antriebsmotors (10) erzeugten Raddrehzahl von der aus der Raddrehzahlsensorinformation des Rades (31, 32, 33, 34) erzeugten Raddrehzahl;
immer dann die aus den Raddrehzahlsensorinformationen des Rades (31, 32, 33, 34) erzeugte Raddrehzahl verwenden, wenn die Abweichung größer als ein voreingestellter Wert ist.

12. Verfahren zum Bremsen eines Fahrzeugs nach Anspruch 10 oder 11, wobei das Verfahren ferner den folgenden Schritt umfasst:
in dem Fall, wenn die Aktualisierungsrate der Raddrehzahlsensorinformation höher ist als die der Drehzahlinformation des Antriebsmotors (10), die Abweichung der aus der Raddrehzahlsensorinformation erzeugten Raddrehzahl von der aus der Drehzahlinformation des Antriebsmotors (10) erzeugten Raddrehzahl kleiner ist als ein voreingestellter Wert, Verwendung der aus der Drehzahlinformation des Antriebsmotors (10) erzeugten Raddrehzahl, wenn die Aktualisierungsrate der Raddrehzahlsensorinformation niedriger ist als die der Drehzahlinformation des Antriebsmotors (10).

13. Verfahren zum Bremsen eines Fahrzeugs nach einem der Ansprüche 10 bis 12, **wobei** der Antriebsmotor (10) ein Paar von Antriebsrädern (33, 34) über ein Differential (50) antreibt, wobei das Verfahren ferner die folgenden Schritte umfasst:
Spekulation der Raddrehzahl eines Antriebsrades (33; 34) auf der Grundlage der Drehzahlinformation des Antriebsmotors (10) und der Raddrehzahlsensorinformation des anderen Antriebsrades (34; 33), wenn die Raddrehzahlsensorinformation eines Antriebsrades (33; 34) des Paars von Antriebsrädern fehlt.

14. Verfahren zum Bremsen eines Fahrzeugs nach einem der Ansprüche 10 bis 12, **wobei** der mindestens eine Antriebsmotor (10) mindestens ein Paar von Antriebsmotoren ist, und wobei ein Paar von Antriebsrädern (33, 34; 31, 32) des Fahrzeugs unabhängig voneinander angetrieben wird, wobei das Verfahren ferner den folgenden Schritt umfasst:
Erzeugen der Raddrehzahl der Antriebsräder (33, 34; 31, 32) entsprechend der Drehzahlinformation der Antriebsmotoren (10) und der Information eines Antriebsmoment-Übertragungsmechanismus zwischen den Antriebsmotoren (10) und den Antriebsrädern (33, 34; 31, 32).

15. Verfahren zum Bremsen eines Fahrzeugs nach Anspruch 14, wobei das Verfahren ferner den folgenden Schritt umfasst:
Verwendung der Raddrehzahl des Antriebsrades (33, 34; 31, 32), die aus der Drehzahlinformation des jeweiligen Antriebsmotors (10) erzeugt wird, wenn die Raddrehzahlsensorinformation eines Antriebsrades (33, 34; 31, 32) fehlt.

16. Verfahren zum Bremsen eines Fahrzeugs nach einem der Ansprüche 10 bis 15, **wobei** das Steuermodul (20A, 20B) eine redundante Antriebsmotor-Steuereinheit (14') umfasst, wobei das Verfahren ferner den folgenden Schritt umfasst:
Steuerung eines Antriebsmotors (13) mittels der redundanten Antriebsmotor-Steuereinheit (14'), wenn der Antriebsmotor-Controller (11) ausfällt.

## Revendications

1. Système de frein pour un véhicule,
le système de frein comprenant un module de commande (20A, 20B) et un frein électromécanique (311, 321, 331, 341) fournissant une force de freinage à une roue (31, 32, 33, 34), dans lequel le module de commande
a) reçoit des informations de vitesse de rotation d'au moins un moteur d'entraînement (10), qui fournit un couple d'entraînement au véhicule, et des informations de capteur de vitesse de roue d'au moins une roue (31, 32, 33, 34),
**caractérisé en ce que** le module de commande
b) compare un taux de rafraîchissement des informations de vitesse de rotation du moteur d'entraînement (10) et un taux de rafraîchissement des informations de capteur de vitesse de roue de la roue (31, 32, 33, 34),
c) génère une vitesse de rotation de roue à l'aide des informations d'un taux de rafraîchissement supérieur et
d) est configuré de telle sorte que, quand la vitesse de rotation de roue générée à partir des informations de vitesse de rotation du moteur entraînement (10) ou celle générée à partir des informations de capteur de vitesse de roue de la roue est utilisée, il utilisera la vitesse de rotation de roue générée à partir de l'autre à des fins de validation.

2. Système de frein pour un véhicule selon la revendication 1, **dans lequel** la vitesse de rotation de roue générée à partir des informations de capteur de vitesse de roue sera toujours utilisée quand l'écart de la vitesse de rotation de roue générée à partir des informations de vitesse de rotation du moteur d'entraînement (10) par rapport à celle générée à partir des informations de capteur de vitesse de roue de la roue est supérieur à une valeur prédéfinie.

3. Système de frein selon la revendication 1 ou 2, **dans lequel** le module de commande (20A, 20B) est configuré de telle sorte que, dans le cas où le taux de rafraîchissement des informations de capteur de vitesse de roue est supérieur à celui des informations de vitesse de rotation du moteur d'entraînement (10), l'écart de la vitesse de rotation de roue générée à partir des informations de capteur de vitesse de roue par rapport à la vitesse de rotation de roue générée à partir des informations de vitesse de rotation du moteur d'entraînement (10) est inférieur à une valeur prédéfinie, quand le taux de rafraîchissement des informations de capteur de vitesse de roue est inférieur à celui des informations de vitesse de rotation du moteur d'entraînement (10), il utilisera la vitesse de rotation de roue générée à partir des informations de vitesse de rotation du moteur d'entraînement.

4. Système de frein selon la revendication 1 à 3, **dans lequel** le moteur d'entraînement (10) entraîne une paire de roues d'entraînement (33, 34) par l'intermédiaire d'un différentiel (50), et le module de commande (20A, 20B) est configuré de telle sorte que, quand les informations de capteur de vitesse de roue de la roue (33, 34) de la paire de roues d'entraînement font défaut, la vitesse de rotation de la roue d'entraînement sera estimée sur la base des informations de vitesse de rotation du moteur d'entraînement (10) et des informations de capteur de vitesse de roue de l'autre roue d'entraînement (34, 33).

5. Système de frein selon l'une quelconque des revendications 1 à 3, **dans lequel** ledit au moins un moteur d'entraînement (10) est l'un au moins d'une paire de moteurs d'entraînement, et dans lequel une paire de roues d'entraînement (33, 34 ; 31, 32) du véhicule sont entraînées indépendamment l'une de l'autre.

6. Système de frein selon la revendication 5, **dans lequel** le module de commande (20A, 20B) est configuré pour générer la vitesse de rotation des roues d'entraînement (33, 34 ; 31, 32) en accord avec les informations de vitesse de rotation des moteurs d'entraînement (10) et les informations d'un mécanisme de transmission de couple d'entraînement entre les moteurs d'entraînement (10) et les roues d'entraînement (33, 34 ; 31, 32).

7. Système de frein selon la revendication 5, **dans lequel** le module de commande (20A, 20B) est configuré de telle sorte que, quand les informations de capteur de vitesse de roue d'une roue d'entraînement (33, 34; 31, 32) font défaut, il utilisera la vitesse de rotation de la roue d'entraînement générée à partir des informations de vitesse de rotation du moteur d'entraînement respectif (10).

8. Système de frein selon l'une quelconque des revendications précédentes, **dans lequel** le module de commande (20A, 20B) comprend une unité de commande de moteur d'entraînement redondante (14') qui peut au moins en partie réaliser la commande de l'entraînement de moteur (13).

9. Système de frein selon l'une quelconque des revendications précédentes, **dans lequel** le système de frein comprend deux modules de commande (20A, 20B) dont chacun constitue un circuit de frein, avec au moins une paire de frein électromécaniques (311, 321 ; 331, 341).

10. Procédé de freinage d'un véhicule, un système de frein du véhicule comprenant un module de commande (20A, 20B) et un frein électromécanique (311, 321, 331, 341) fournissant une force de freinage à une roue (31, 32, 33, 34), dans lequel le module de commande (20A, 20B) reçoit des informations de vitesse de rotation à partir d'au moins un moteur d'entraînement (10), qui fournit un couple d'entraînement au véhicule, et des informations de capteur de vitesse de roue d'au moins une roue (31, 32, 33, 34), le procédé comprenant les étapes suivantes :
a) comparer le taux de rafraîchissement des informations de vitesse de rotation du moteur d'entraînement (10) et le taux de rafraîchissement des informations de capteur de vitesse de roue de la roue (31, 32, 33, 34) ;
b) générer une vitesse de rotation de la roue à partir de l'un d'un taux de rafraîchissement supérieur à partir des informations de vitesse de rotation du moteur d'entraînement (10) et des informations de capteur de vitesse de roue de la roue (31, 32, 33, 34) ; et
c) valider la vitesse de rotation générée de la roue avec une vitesse de rotation de roue générée à partir de l'autre des informations de vitesse de rotation du moteur d'entraînement (10) et des informations de capteur de vitesse de roue de la roue (31, 32, 33, 34).

11. Procédé de freinage d'un véhicule selon la revendication 10, le procédé comprenant en outre les étapes suivantes :
calculer l'écart de la vitesse de rotation de roue générée à partir des informations de vitesse de rotation du moteur d'entraînement (10) par rapport à celle générée à partir des informations de capteur de vitesse de roue de la roue (31, 32, 33, 34) ;
toujours utiliser la vitesse de rotation de roue générée à partir des informations de capteur de vitesse de roue de la roue (31, 32, 33, 34) quand l'écart est supérieur à une valeur prédéfinie.

12. Procédé de freinage d'un véhicule selon la revendication 10 ou 11, le procédé comprenant en outre l'étape suivante :
dans le cas où le taux de rafraîchissement des informations de capteur de vitesse de roue est supérieur à celui des informations de vitesse de rotation du moteur d'entraînement (10), l'écart de la vitesse de rotation de roue générée à partir des informations de capteur de vitesse de roue par rapport à la vitesse de rotation de roue générée à partir des informations de vitesse de rotation du moteur d'entraînement (10) est inférieur à une valeur prédéfinie, utiliser la vitesse de rotation de roue générée à partir des informations de vitesse de rotation du moteur d'entraînement (10), quand le taux de rafraîchissement des informations de capteur de vitesse de roue est inférieur à celui des informations de vitesse de rotation du moteur d'entraînement (10).

13. Procédé de freinage d'un véhicule selon l'une quelconque des revendications 10 à 12, **dans lequel** le moteur d'entraînement (10) entraîne une paire de roues d'entraînement (33, 34) par l'intermédiaire d'un différentiel (50), le procédé comprenant en outre les étapes suivantes :
estimer la vitesse de rotation de roue d'une roue d'entraînement (33, 34) sur la base des informations de vitesse de rotation du moteur d'entraînement (10) et des informations de capteur de vitesse de roue de l'autre roue d'entraînement (34, 33), quand les informations de capteur de vitesse de roue d'une roue d'entraînement (33, 34) de la paire de roues d'entraînement font défaut

14. Procédé de freinage d'un véhicule selon l'une quelconque des revendications 10 à 12, **dans lequel** ledit au moins un moteur d'entraînement (10) est au moins une paire de moteurs d'entraînement, et dans lequel une paire de roues d'entraînement (33, 34 ; 31, 32) du véhicule sont entraînées indépendamment l'une de l'autre, le procédé comprenant en outre l'étape suivante :
générer la vitesse de rotation de roue des roues d'entraînement (33, 34 ; 31, 32) en accord avec les informations de vitesse de rotation des moteurs d'entraînement (10) et des informations d'un mécanisme de transmission de couple d'entraînement entre les moteurs d'entraînement (10) et les roues d'entraînement (33, 34 ; 31, 32).

15. Procédé de freinage d'un véhicule selon la revendication 14, le procédé comprenant en outre l'étape suivante :
utiliser la vitesse de rotation de roue de la roue d'entraînement (33, 34 ; 31, 32) générée à partir des informations de vitesse de rotation du moteur d'entraînement respectif (10), quand les informations de capteur de vitesse de roue d'une roue d'entraînement (33, 34 ; 31, 32) font défaut.

16. Procédé de freinage d'un véhicule selon l'une quelconque des revendications 10 à 15, **dans lequel** le module de commande (20A, 20B) comprend une unité de commande de moteur d'entraînement redondante (14'), le procédé comprenant en outre l'étapes suivante :
commander un entraînement de moteur (13) au moyen de l'unité de commande de moteur d'entraînement redondante (14') quand le contrôleur de moteur d'entraînement (11) est défaillant.
